(19) Europäisches Patentamt / European Patent Office / Office européen des brevets

(11) **EP 1 978 124 B1**

(12) **EUROPEAN PATENT SPECIFICATION**

(45) Date of publication and mention
of the grant of the patent:
**22.10.2014 Bulletin 2014/43**

(51) Int Cl.:
*C22C 38/02* (2006.01)   *C22C 38/04* (2006.01)
*C22C 38/06* (2006.01)   *C22C 38/44* (2006.01)
*C22C 38/46* (2006.01)   *C21D 6/00* (2006.01)
*C21D 7/13* (2006.01)   *C21D 9/30* (2006.01)
*F16C 3/08* (2006.01)

(21) Application number: **08003276.6**

(22) Date of filing: **22.02.2008**

(54) **Forging steel, forging and crankshaft**

Schmiedestahl, Schmiedestück und Kurbelwelle

Forgeage d'acier, forgeage et vilebrequin

(84) Designated Contracting States:
**CZ DE ES FI NO PL**

(30) Priority: **05.04.2007 JP 2007099713**
**19.09.2007 JP 2007242860**

(43) Date of publication of application:
**08.10.2008 Bulletin 2008/41**

(73) Proprietor: **Kabushiki Kaisha Kobe Seiko Sho**
**Chuo-ku**
**Kobe-shi**
**Hyogo 651-8585 (JP)**

(72) Inventors:
- **Abiko, Takashi**
  **Kobe-shi**
  **Hyogo 651-2271 (JP)**
- **Deura, Tetsushi**
  **Kobe-shi**
  **Hyogo 651-2271 (JP)**
- **Nagao, Motohiro**
  **Takasago-shi**
  **Hyogo 676-8670 (JP)**
- **Tomioka, Atsushi**
  **Takasago-shi**
  **Hyogo 676-8670 (JP)**
- **Fukaya, Shogo**
  **Takasago-shi**
  **Hyogo 676-8670 (JP)**
- **Urushihara, Wataru**
  **Kobe-shi**
  **Hyogo 651-2271 (JP)**
- **Fujitsuna, Nobuyuki**
  **Takasago-shi**
  **Hyogo 676-8670 (JP)**

(74) Representative: **Müller-Boré & Partner**
**Patentanwälte PartG mbB**
**Friedenheimer Brücke 21**
**80639 München (DE)**

(56) References cited:
EP-A- 1 420 078   DE-A1- 10 156 999
JP-A- 2000 096 185   JP-A- 2004 225 128
JP-A- 2006 336 092   US-A- 4 318 739
US-A- 5 855 846   US-A- 5 919 415

**Description**

The present invention relates to a forging steel, a forging made of the forging steel, and a crankshaft made of the forging steel. More particularly, the present invention relates to a forged steel having a controlled S inclusion content and a controlled Ti inclusion content. Forgings of the present invention are used widely and effectively in the industrial fields of machines, ships and power generators. The forged steel of the present invention is particularly suitable for forming parts required to have high fatigue strength, such as rotating parts.

A steel forging made by forging a forging steel, such as a large crankshaft, namely, a transmission member of a marine driving machine, is required to be resistant to fatigue fracture under severe working condition and to have an excellent fatigue endurance characteristic.

Studies of the improvement of the fatigue endurance characteristic of low-alloy steels for forming crankshafts for marine engines are mentioned in "Study of Fatigue Strength of High-Strength Materials for Crankshafts", Jour. of the JIME, Vol. 36, No. 6, pp. 385 to 390 (2001) (Cited reference 1). It is mentioned in Cited reference 1 that (i) there is a tendency that inclusions are liable to be starting points of fatigue fracture and this tendency becomes remarkable with the enhancement of the strength of steels, (ii) the greater the size of inclusions, the lower the fatigue endurance characteristic, and (iii) the fatigue strength of steels containing elongated inclusions tends to be anisotropic. It is also mentioned in Cited reference 1 that it is effective in improving the fatigue endurance characteristic of forging materials to spherodize inclusions and to form the same in small sizes.

Ahigh-strength forging steel mentioned in JP-A 2004-211206 (Cited reference 2) can be manufactured at a low cost by keeping a costly alloy element (especially Ni) small, has high strength and is a useful material for forming large crankshafts. Fatigue strength is an important property of steels for forming crankshafts and, as mentioned above, inclusions are starting points of fatigue fracture. Since the composition and shape of inclusions cannot be controlled only by the principal components of a steel, the steel cannot have a satisfactory endurance limit ratio expressed by: (Fatigue strength (MPa))/(Tensile strength (MPa)).

Techniques for controlling the shape of inclusions contained in steels are mentioned in JP-A H7-188853 (Cited reference 3) and JP-A H7-238342 (Cited reference 4). In Cited references 3 and 4, generation of hardly coagulating oxide inclusions, such as MgO and $MgO \cdot Al_2O_3$, is mentioned. Cited references 3 and 4 elucidate the suppression of the stretchability of inclusions and the reduction of the anisotropy of mechanical strength by converting part of MnS, namely, a sulfide, into $(Mn \cdot Mg)S$

A steel for machine structural use that is superior in machinability to free cutting steels is disclosed in JP-A 2000-87179 (Cited reference 5). Sulfides including MnS, CaS, MgS, (Ca, Mn) S, and (Ca, Mg, Mn) S are added to a steel to improve the machinability of the steel. Cited reference 5 elucidates that the anisotropy of mechanical properties can be suppressed and the steel is superior in machinability to free cutting steels when the shape of sulfides is controlled by adding REM, Ca and Mg to the steel. However, this technique for controlling the shapes of inclusions is not intended for forgings to be used under a severe working condition, such as transmission member of marine driving machines.

In enhancing the fatigue endurance characteristic of the steel, a technique for spheroidizing and micronizing inclusions is disclosed in JP-A 2004-225128 (Cited reference 6). This technique generates hardly coagulating oxides that can be nuclei of inclusions, such as MgO and $MgO \cdot Al_2O_3$, and precipitates (Mg, Ca, Mn)S, which is in more difficulty to deform than MnS, around the oxides to spheroidize and micronize inclusions. However, Cited reference 6 specifies a S concentration of 10 ppm and does not specify Ti concentration. Although this technique intends to micronize inclusions, S and Ti segregate in the steel while the steel solidifies and the S and the Ti concentration increase if the S and the Ti concentration are higher than a fixed value. Consequently, coarse S and Ti inclusions are generated to deteriorate the fatigue endurance characteristic of the steel.

A technique disclosed in JP-A S62-63651 (Cited reference 7) provides a steel having rated life and average life longer than those of conventional steels by limiting the O content and the Ti content to 0.0008% or below and 0.0025% or below, respectively, reducing elements that are detrimental to endurance life, machinability and cold-forgeability to the least possible extent, and reducing the S content to 0.008% or below which is lower than those of conventional steels.

Hydrogen cracking becomes liable to arise as cleanliness and fatigue strength is enhanced. Measures relating to both steel refining techniques, and the composition and structure of steels have been taken to cope with such a problem. Measures relating to steel refining techniques specify an upper limit to the hydrogen content of a molten steel during refining, and subject the molten steel to a dehydrogenation process when the hydrogen content of the steel exceeds the upper limit. These measures are applied to practical refining work.

An inclusion removing method proposed in JP-A 2003-183722 (Cited reference 8) reduces inclusions by secondary refining, and removes inclusions by circulating a molten steel between a ladle and a degassing tank during a RH vacuum degassing process.

A hydrogen cracking resistance improving method proposed in JP-A 2003-268438 (Cited reference 9) prevents the concentration of hydrogen by increasing the S content of a steel to produce MnS inclusion in the steel.

JP-A 2006-336092 (Cited reference 10) increases the Ti, the Zr, the Hf and the Nb content of a steel and specifies the density (which means the density of impurities in number of impurities per unit area, hereinafter referred to as number density) and circularity of inclusions of diameters not smaller than 20 $\mu$m, and the number density of inclusions of diameters between 1 and 10 $\mu$m. Concentration of hydrogen is prevented by adding Ti, Zr, Hf and Nb compounds to the steel to improve hydrogen cracking resistance.

The effect of the dehydrogenation process on reducing hydrogen is limited by time and cost needed by the dehydrogenation process. Generally, steel manufacturing is controlled to limit the hydrogen content of the steel to values on the order of one to several parts per million. However, hydrogen cracking cannot be completely prevented by limiting the hydrogen content below such a level because a very small amount of hydrogen can cause hydrogen cracking. The method that increases the S content of the steel and the method that increases the Ti, the Zr, the Hf and the Nb content of the steel can undoubtedly improve hydrogen cracking resistance, and the latter method can maintain fatigue strength by specifying the upper limit to the number density of inclusions of diameters not smaller than 20 $\mu$m. However, increase in those contents tends to.deteriorate the cleanliness, mechanical properties and fatigue strength of the steel, and even the inclusions smaller than 20 $\mu$m can cause fatigue fracture. Thus the method cannot meet demand for higher cleanliness and higher fatigue strength.

Hydrogen embrittlement suppressing methods employed in the cold rolled steel manufacturing field suppress the entrance of hydrogen into the steel due to external factor, such as corrosion, or suppress the diffusion of hydrogen by using carbonitride precipitated by tempering. The behavior of hydrogen during hydrogen embrittlement suppression by those methods is different from that of hydrogen during cooling or during natural cooling at room temperature in which hydrogen cracking develops in a short time shorter than a time in which corrosion develops.

Some marine diesel engines and diesel engines for driving power generators are provided with an integral crankshaft and the others are provided with an assembled crankshaft. Small and middle-size diesel engines are provided with an integral crankshaft. An integral crankshaft is manufactured by a RR forging method, a TR forging method or a multishaft pressing method. The RR forging method, namely, a generally known method of making crankshafts by continuous grain flow forging (CGF), is a forging method that forms a main journal, a crankpin, and crank arms for one cylinder in one forging cycle. Fatigue strength is one of crucial properties required of a material forming the integral crankshaft. Stress is concentrated on the fillet at the joint of the crank arm and the main journal while the crankshaft is in practical operation. Therefore, the fillet is required to have a high fatigue strength.

The fillet is forged at a high working ratio and hence inclusions contained in the forging steel forming the fillet are deformed greatly. Even if inclusions contained in the steel are spheroidized as mentioned in Cited references 4 and 6, stretching the inclusions by RR forging will adversely affect the fatigue strength of the steel. When the number density of inclusions is large, the inclusions will be densified in high-density inclusion groups, and the effective area of the inclusions increases when the steel is compressed at a high working ratio even if the inclusions are spheroidized in small shapes, and the inclusion groups will adversely affect the fatigue strength of the steel. Consequently, the fatigue strength of the steel will be insufficient.

The techniques proposed in those cited references, however, cannot successively achieve providing a forged steel scarcely subject to fracture under a severe working condition, having a satisfactory fatigue endurance characteristic, and a sufficiently high hydrogen cracking resistance.

Other techniques to improve the characteristics of steels are described in EP-A-1 420 078, US-patent 5,855,846, US-patent 5,919,415 or JP-A-2000-096185.

Accordingly, it is a first object of the present invention to provide a forged steel excellent in fatigue endurance characteristic. A second object of the present invention is to provide a forged steel containing the least necessary amount of inclusions, and excellent in hydrogen cracking resistance.

The inventors of the present invention made studies to solve the foregoing problems and found that a forged steel having a high fatigue strength and a high endurance limit ratio can be obtained by limiting the respective number densities of S inclusion particles having a length above 5 $\mu$m and Ti inclusion particles having a length above 5 $\mu$m to a fixed number or below.

It was also found that the forged steel is excellent in hydrogen cracking resistance when the respective number densities of inclusion particles containing S between 1 and 5 $\mu$m in length and inclusion particles containing Ti between 1 and 5 $\mu$m in length are not below a fixed value.

A forged steel according to one aspect of the present invention consists of 0.15 to 0.75% by mass C, 0.1 to 0.6% by mass Si, 0.3 to 1.4% by mass Mn, 0.1 to 2% by mass Ni, 0.5 to 2.5% by mass Cr, 0.1 to 0.5% by mass Mo, 0.01 to 0.2% by mass V, 0.015 to 0.04% by mass Al, 0.0002 to 0.002% by mass S, 0.0002 to 0.003% by mass Ti, and optionally one or more of Ca, B, W, Nb, Ta, Cu, Ce, Zr and Te, in a total amount of 0.1% by mass or below, and the balance of Fe and inevitable impurities; wherein the respective number densities of S-containing inclusion particles having a S content of 20% by mass or above, and Ti-containing inclusion particles having a Ti content of 50% by mass or above among inclusion particles above 5 $\mu$m in length present in an observation area in a cross section of the forged steel are 100 particles/cm$^2$ or below, and 30 particles/cm$^2$ or below, respectively, and wherein the respective number densities of inclusion particles having a S content of 20% by mass or above, and inclusion particles having a Ti content of 50% by mass among inclusion particles between 1 and 5 $\mu$m in length present in the cross section of the forged steel is 10 particles/cm$^2$ or above and 5 particles/cm$^2$ or above, respectively.

The forged steel is preferably used for making a crankshaft.

The crankshaft may be such as having main journals of a diameter of 200 mm or above, and may be used as a component of a diesel engine for power generation or a ship.

According to the aspect, when both the number densities of S-containing inclusion particles above 5 $\mu$m in length and Ti-containing inclusions above 5 $\mu$m in length present in the observation area in a cross section of the forged steel are held to predetermined values or below, respectively, the forged steel is scarcely subject to fracture under a severe working condition, excellent in fatigue endurance characteristic, and satisfactory in endurance limit ratio expressed by: (Fatigue strength (MPa))/(Tensile strength (MPa)).

The forged steel is excellent in hydrogen cracking resistance when the respective number densities of S-containing inclusion particles between 1 and 5 $\mu$m in length and Ti-containing inclusions between 1 and 5 $\mu$m in length are not below a fixed value.

The above and other objects, features and advantages of the present invention will become more apparent from the following description taken in connection with the accompanying drawings, in which:

Fig. 1A is an end view of a round bar forged by a forging press;
Fig. 1B is a side elevation of the round bar shown in Fig. 1A;
Fig. 2A is an end view of a round bar forged by a forging press;
Fig. 2B is a side elevation of the round bar shown in Fig. 2A;
Fig. 3 is a front elevation of a test apparatus for immersing a specimen in an aqueous solution;
Fig. 4A is an end view of a crankshaft; and
Fig. 4B is a side elevation of the crankshaft shown in Fig. 4A.

Forged steels in preferred embodiments of the present invention will be described.

The inventors of the present invention made studies, from all angles, of the kinds, sizes and densities of inclusions contained in forged steels with a first object to provide forgings having improved fatigue endurance characteristic to be used in a severe environment, and a second object to enhance the hydrogen cracking resistance of forgings.

It was found through the studies that, differing from fracture in a forging formed by a continuous casting process, fracture in a large forging formed by forging an ingot, does : not start from fine inclusions of primary size and starts from coarse inclusions, namely, inclusion aggregates, formed by the agglomeration of fine inclusions.

Principal inclusions present in a fracture surface are coarse S-containing inclusions and coarse Ti-containing inclusions. It was found that the degradation of fatigue endurance characteristic is caused especially by those coarse S-containing and Ti containing inclusions.

Ingots made by casting, as compared with those made by continuous casting, solidifies at a low solidification rate. Therefore, inclusions are pushed out from solidification interfaces into the liquid phase during solidification. Consequently, the inclusions are liable to agglomerate in high densities during the solidifying process, the possibility that inclusions of a primary size agglomerate increases, and, consequently, coarse inclusions are liable to form.

S and Ti are concentrated by segregation during solidification, and, consequently, coarse S and Ti inclusions, which cannot be found in the molten steel, crystallize and precipitate.

Therefore, the number density of inclusion particles needs to be reduced and the inclusions need to be micronized to provide the steel with a fatigue strength required of steels for forming crankshafts and such. It is particularly important to reduce inclusions that precipitate during solidification.

It is considered that the probability of inclusion aggregate formation can be reduced, the size of inclusion particles can be reduced, and a high fatigue strength required of forgings including crankshafts can be ensured when inclusions that precipitate during solidification are reduced.

Number Density of S-Containing Inclusions of Length above 5 μm: 100 particles/cm² or below

Number Density of Ti-containing Inclusions of Length above 5 μm: 30 particles/cm² or below

The inventors of the present invention found through studies that a forged steel has a high endurance limit ratio when the respective number densities of S-containing inclusion particles containing S in 20% by mass or above and Ti-containing inclusion particles containing Ti in 50% by mass or above among inclusions above 5 $\mu$m in length present in an observation area in a cross section of the forging steel are 100 particles/cm² or below, and 30 particles/cm² or below, respectively. Preferably, the number density of the S-containing inclusions having a S content of 20% by mass or above is 50 particles/cm² or below more desirably, 30 particles/cm² or below. Preferably, the number density of the Ti-containing inclusion particles having a Ti content of 50% by mass or above is 10 particles/cm² or below more desirably, 5 particles/cm².

The purport of the S-containing inclusions having a S content of 20% by mass or above and the Ti-containing inclusions having a Ti content of 50% by mass or above mentioned in this specification will be described.

Inclusions present in a forging steel include a sulfide inclusion of a single element or a plurality of elements, an oxide inclusion of a single element or a plurality of elements, a nitride inclusion of a single element or a plurality of element, compound inclusions of some of those inclusions, such as a mixture of a sulfide and an oxide. Principal component elements of those inclusions are Al, S, Mn, Mg, Ti, Si, and Ca. The S and the Ti content are defined by Expressions (1) and (2), respectively.

$$\text{S Content} = \{[S]/([Al] + [S] + [Mn] + [Mg] + [Ti] + [Si] + [Ca])\} \times 100 \ \dots\dots\dots (1)$$

$$\text{Ti Content} = \{[Ti]/([Al] + [S] + [Mn] + [Mg] + [Ti] + [Si] + [Ca])\} \times 100 \ \dots\dots\dots (2)$$

where elements in square brackets indicate the total element contents in mass percent of the inclusions.

According to a definition used in this specification, an inclusion having a S content of 20% by mass or above calculated by using Expression (1) is called a S-containing inclusion, and an inclusion having a Ti content of 50% by mass or above calculated by using Expression (2) is called a Ti-containing inclusion.

The purport of the respective densities of 100 particles/cm² or below and 30 particles/cm² or below of the S-containing inclusions of above 5 $\mu$m in length having a S content of 20% by mass or above, and the Ti-containing inclusions of above 5 $\mu$m in length having a Ti content of 50% by mass or above among inclusions of various shapes and compositions present in a cross section of a forged steel is elucidated on the basis of the definition.

Number Density of S-Containing Inclusion Particles of Length between 1 and 5 $\mu$m: 10 particles/cm² or above

Number Density of Ti-containing Inclusion Particles of Length between 1 and 5 $\mu$m: 5 particles/cm² or above

S-containing inclusions contained in a steel are in shapes of low circularity. Long and large S-containing inclusions can be starting points of fracture and exert a harmful influence on the steel. Fine S-containing inclusions of length between 1 and 5 $\mu$m form stress fields in the steel, are effective in improving the hydrogen cracking resistance of the steel by catching and holding hydrogen contained in a hydrogen content exceeding a solubility limit in the steel.

Ti-containing inclusions are dispersed in the steel in fine particles of TiN, TiC, $Ti_4C_2S_2$ and such. Ti-containing inclusions have a significant effect on improving the hydrogen cracking resistance of the steel by occluding and holding excess hydrogen contained in the steel in a hydrogen content exceeding a solubility limit. Energy of chemical bond by which the Ti-containing inclusions occlude hydrogen is very high. Such chemical bond of high energy is effective in suppressing hydrogen diffusion that arises during a process of cooling the steel at a higher temperature.

Fine S-containing and Ti-containing inclusions of length between 1 and 5$\mu$m among the inclusions are particularly excellent in a hydrogen cracking preventing effect.

The inventors of the present invention found through studies that a steel has a high hydrogen cracking resistance when the respective densities of S-containing inclusion particles having a S content of 20% by mass or above, and Ti-containing inclusion particles having a Ti content of 50% by mass or above among inclusions of length between 1 and 5 $\mu$m present in a cross section of the steel are 10 particles/cm$^2$ and 5 particles/cm$^2$. Preferably, the number density of S-containing inclusion particles having a S content of 20% by mass or above be 20 particles/cm$^2$ or above, more desirably, 30 particles/cm$^2$ or above. Preferably, the number density of Ti-containing inclusion particles having a Ti content of 50% by mass or above be 10 particles/cm$^2$, more desirably, 15 particles/cm$^2$ or above.

With respect to hydrogen cracking, it is desirable to increase inclusions that precipitate during solidification by adding much elements that form those fine inclusions. However, it is desirable that an ingot contains those elements in contents that will not form hydrogen cracking starting points and will not reduce fatigue strength.

Size and Number Density of S-Containing Inclusion Particles

Sulfur (S) bonds easily to Mn, Mg, Ca and such contained in a steel to form S-containing inclusions. If the inclusions are contained in a steel in a high number density, the inclusions agglomerate in inclusion particle aggregates and the inclusion particle agglomerates reduces the fatigue strength of the steel even if the inclusions are fine. The agglomeration of the inclusions in coarse inclusions, namely, coarse inclusion particle aggregates, can be prevented by reducing the number density of the S-containing inclusion particles.

The average size of the S-containing inclusions can be reduced by adding Ca having an effect on spheroidizing S-containing inclusions to the steel by increasing the content ratio of CaS inclusions having a short length. The number density of S-containing inclusion particles in the steel is small when the S content of the steel is low.

Size and Number Density of Ti-Containing Inclusion Particles

Titanium (Ti) and N contained in a steel bond together and most of the Ti-containing inclusions contained in the steel are nitrides. Therefore, the number density of Ti-containing inclusion particles can be reduced by reducing the N content of the steel. When the number density of the Ti-containing inclusion particles is thus reduced, coarse Ti-containing inclusions are difficult to form. The N content of the steel can be reduced by a vacuum degassing process. Nitrogen contained in the steel can be satisfactorily removed by a long vacuum degassing process.

Inclusions between 1 and 5 $\mu$m in Length

Practically, even inclusions below 1 $\mu$m in length can improve hydrogen cracking resistance. Therefore, it is desirable that the steel contains inclusions below 1 $\mu$m in length in a high inclusion content. Since the distribution characteristic of inclusions of length below 1 $\mu$m is similar to that of inclusions of length between 1 and 5 $\mu$m, a hydrogen cracking property can be satisfactorily estimated only by counting the number of inclusions between 1 and 5 $\mu$m in length in a unit measuring area. The count of inclusions below 1 $\mu$m is neglected to facilitate double check.

Chemical Components of Steel

As mentioned above, the present invention is characterized in controlling the respective sizes and densities of S-containing and Ti-containing inclusions and does not place any particular restrictions on the basic composition of the steel. However, the steel of the present invention meets the following basic composition according to the general technical level of steels to provide the steel with strength, toughness and fatigue endurance characteristic required of steels for forming, for example crankshafts.

C Content: 0.15 to 0.75% by mass

Carbon (C) is an element effective in improving strength. The C content of a steel intended for forming crankshafts is 0.15% by mass or above, desirably, 0.30% by mass or above, more desirably, 0.34% by mass or above to ensure the steel a sufficient strength for forming crankshafts. However, an excessive C content reduces the toughness of crankshafts. Therefore, the C content is 0.75% by mass or below, desirably 0.6% by mass or below, more desirably 0.5% by mass or below.

Si Content: 0.1 to 0.6% by mass

Silicon (Si) is a strength improving element. Thus, the Si content of a steel intended for forming crankshafts is 0.1% by mass or above, desirably, 0.15% by mass or above, more desirably, 0.20% by mass or above to ensure the steel a sufficient strength for forming crankshafts. However, an excessive Si content causes remarkable inverse V segregation and makes obtaining clean ingots difficult. Therefore, the Si content of the steel is 0.6% by mass or below, desirably, 0.35% by mass or below.

Mn Content: 0.3 to 1.4% by mass.

Manganese (Mn) is an element effective in improving both hardenability and strength. Thus, the Mn content of a steel is 0.3% by mass or above, desirably, 0.8% by mass or above, more desirably, 0.9% by mass or above to ensure the steel a sufficient strength and satisfactory hardenability. However, an excessive Mn content promotes inverse V segregation. Therefore, the Mn content of the steel is 1.4% by mass or below, desirably, 1.2% by mass or below, more desirably, 1.1% by mass or below.

Ni Content: 0.1 to 2% by mass

Nickel (Ni) is an element effective in improving toughness. Thus, the Ni content of a steel is 0.1% by mass or above, desirably, 0.2% by mass or above. An excessive Ni content increases the cost of the steel. Therefore, the Ni content is 2% by mass or below, preferably, 1.75% by mass or below.

Cr Content: 0.5 to 2.5% by mass

Chromium (Cr) is an element effective in improving both hardenability and toughness. Such a characteristic of Cr can be effectively exhibited when the Cr content of a steel is 0.5% by mass or above, desirably, 0.7% by mass or above, more desirably, 1.75% by mass or above. An excessive Cr content promotes inverse V segregation and makes the manufacture of a steel of high cleanliness difficult. Therefore, the Cr content is 2.5% by mass or below, desirably, 2.0% by mass or below.

Mo content: 0.1 to 0.5% by mass

Molybdenum (Mo) is an element effective in improving hardenability, strength and toughness. Such a characteristic of Mo can be effectively exhibited when the Mo content of a steel is 0.1% by mass or above, desirably, 0.2% by mass or above, more desirably, 0.25% by mass or above. Molybdenum (Mo) has a small equilibrium distribution coefficient and makes microsegregation (normal segregation) easy. Therefore, Mo content is 0.5% by mass or below.

V Content: 0.01 to 0.2% by mass

Vanadium (V) is effective in precipitation hardening and structure refining and enhancing strength. Thus, the steel has a V content of 0.01% by mass or above to exhibit such a characteristic of V effectively. Since the favorable effect of V saturates at a certain V content and an excessive V content is economically useless, the V content of a steel is 0.2% by mass or below, desirably, 0.15% by mass or below.

A1 Content: 0.015 to 0.04% by mass

Aluminum (Al) serves effectively as a deoxidizing element in steel making processes, and effectively improves the cracking resistance of steels. A steel of the present invention has an Al content of 0.015% by mass or above, preferably, 0.02% by mass or above. When the Al content of a steel is excessively high, $Al_2O_3$ is produced to deteriorate fatigue endurance characteristic. Therefore, the A1 content is 0.04% by mass or below, preferably, 0.03% by mass or below.

S Content: 0.0002 to 0.002% by mass

Sulfur (S) is liable to form coarse inclusions in a forged steel and reduces the fatigue strength of the forged steel. The S content of the forged steel is 0.002% by mass or below, desirably, 0.0015% by mass or below, more desirably, 0.001% by mass or below.
When a forged steel contains fine S-containing inclusions in a fixed number density or above, many stress fields are formed in the forged steel, excess hydrogen exceeding solubility limit contained in the forged steel can be easily caught, and the hydrogen cracking resistance of the forged steel is improved. To make the forged steel contain S-containing inclusions in a proper number density, the S content of the forged steel is 0.0002% by mass or above, desirably, 0.0004% by mass or above, more desirably, 0.0006% by mass or above.

The S content can be adjusted by controlling the composition of slag for ingot making. More concretely, the S content of a steel can be reduced by raising the ratio of the CaO content of the slag to the $SiO_2$ content of the slag, namely, the $CaO/SiO_2$ ratio which will be designated as the C/S ratio. The S content of a steel can be reduced by a supplementary means that raises the ratio of the CaO content to the $Al_2O_3$ content, namely, the $CaO/Al_2O_3$ ratio which will be designated as the C/A ratio. The S content can be increased by adjusting the composition of the slag such that the C/S ratio and the C/A ratio are low.

Ti Content: 0.0002 to 0.003% by mass

Titanium (Ti) forms coarse nitride particle in a forged steel. The coarse nitride particles reduce the fatigue strength of the forged steel. The Ti content of the forged steel is 0.003% by mass or below, desirably, 0.0025% by mass or below, more desirably, 0.002% by mass or below.

Fine Ti-containing inclusions are dispersed in a forged steel in fine TiN, TiC, and $Ti_4C_2S_2$ particles. The Ti-containing inclusions catch and hold excess hydrogen contained in a hydrogen content exceeding a solubility limit in the forged steel. Thus the Ti-containing inclusions have a significant effect on improving the hydrogen cracking resistance of the forged steel. To ensure that the forged steel contains the Ti-containing inclusions in a proper content, the Ti content of the forged steel is 0.0002% by mass or above, desirably, 0.0004% by mass or above, more desirably, 0.0006% by mass or above.

The Ti content can be adjusted by properly mixing a low-quality alloy having a high Ti content, and a high-quality alloy having a low Ti content in a proper mixing ratio.

The foregoing elements are basic components of the forged steel of the present invention, and the balance is Fe and inevitable impurities.

Other elements that may be positively added to the forged steel are, for example, Ca capable of suppressing the elongation of sulfides, B having a hardenability improving effect, and W, Nb, Ta, Cu, Ce, Zr, and Te having solid solution hardening and precipitation hardening effects. Those elements may be individually added to the forged steel or some of those elements may be added in combination to the forged steel, in a total amount of 0.1% by mass or below.

There is not any particular restriction .on a forging manufacturing method of manufacturing the forging of the present invention. For example, the forging may be manufactured by a forging manufacturing method including the steps of: melting a steel of a predetermined composition in an electric furnace, removing impurities including S and gaseous components including O by vacuum refining or the like, making an ingot, processing the ingot heated at about 1200°C by rough forging to obtain a workpiece, inspecting the workpiece by intermediate inspection, forging the inspected and heated workpiece to obtain a semifinished forging, subjecting the semifinished forging to a heat treatment at about 870°C for homogenizing and quench hardening, and finish-machining the semifinished forging to obtain a finished forging.

Examples

The present invention will be concretely described in terms of its examples.

Example 1

Manufacture of Test Steel

Test steels respectively having chemical compositions shown in Table 1 were melted by a steelmaking system including an arc furnace, ingots of those steels were made, and the ingots were forged to obtain steel forgings.

The chemical composition of each steel forging was adjusted by adding Al and Ca to the molten steel. The molten steel was cast in a mold of 10 to 90 t class, which is 2m to 4m in total height, to obtain an ingot. The ingot removed from the mold and heated up to about 1200°C was subjected to a hot forging process to finish the ingot in a steel forging of a diameter between 150 and 700 mm. The hot forging process stretched the ingot in a bar by a press, and shaped the bar in a forged round bar by a special shaping tool.

Measured data on the components of the steel forgings, the compositions and sizes of inclusions, and the endurance limit ratios of the steel forgings ((Fatigue strength) / (Tensile strength)) are shown in Table 1. In a column for Ca content in Table 1, bars "-" indicates a Ca content below a detection limit Ca content of 0.0005% by mass or below. Since Ca is hardly soluble in steels, Ca contained in steels can be detected when the Ca content of the steels is between 5 and 10% by mass.

Table 1

| Sample No | Composition (mass percent) | | | | | | | | | | | Basicity (CIS) | C/A | Inclusion (above 5 μm) | | Endurance limit ratio | |
|---|---|---|---|---|---|---|---|---|---|---|---|---|---|---|---|---|---|
| | C | Si | Mn | Ni | Cr | Mo | V | Al | Ca | S | Ti | | | S-containing | Ti-containing | OR | 1/3R |
| 1 | 0.60 | 0.22 | 1.00 | 0.42 | 2.05 | 0.35 | 0.08 | 0.035 | - | 0.0010 | 0.0011 | 9.8 | 2.0 | 40 | 6 | 0.504 | 0.504 |
| 2 | 0.70 | 0.19 | 0.80 | 0.75 | 1.15 | 0.28 | 0.12 | 0.025 | - | 0.0010 | 0.0016 | 9.7 | 1.5 | 24 | 1 | 0.487 | 0.518 |
| 3 | 0.43 | 0.17 | 0.77 | 0.74 | 1.12 | 0.26 | 0.10 | 0.026 | - | 0.0010 | 0.0009 | 9.2 | 1.6 | 20 | 0 | 0.476 | 0.523 |
| 4 | 0.30 | 0.22 | 0.91 | 0.40 | 2.04 | 0.30 | 0.05 | 0.039 | - | 0.0009 | 0.0005 | 9.7 | 2.1 | 16 | 0 | 0.479 | 0.492 |
| 5 | 0.45 | 0.36 | 0.69 | 1.70 | 1.75 | 0.32 | 0.19 | 0.026 | - | 0.0006 | 0.0012 | 7.5 | 1.9 | 31 | 2 | 0.471 | 0.490 |
| 6 | 0.25 | 0.29 | 0.55 | 1.62 | 1.55 | 0.21 | 0.15 | 0.026 | - | 0.0008 | 0.0009 | 6.8 | 2.3 | 58 | 0 | 0.472 | 0.483 |
| 7 | 0.31 | 0.23 | 1.05 | 0.25 | 1.65 | 0.29 | 0.06 | 0.025 | 0.0005 | 0.0012 | 0.0008 | 8.0 | 1.7 | 55 | 5 | 0.461 | 0.466 |
| 8 | 0.40 | 0.26 | 0.85 | 0.31 | 2.05 | 0.28 | 0.10 | 0.022 | - | 0.0018 | 0.0016 | 6.6 | 2.4 | 32 | 20 | 0.458 | 0.460 |
| 9 | 0.45 | 0.20 | 0.82 | 0.35 | 1.75 | 0.26 | 0.09 | 0.022 | - | 0.0004 | 0.0025 | 6.6 | 2.1 | 21 | 27 | 0.452 | 0.462 |
| 10 | 0.66 | 0.29 | 0.91 | 0.21 | 1.99 | 0.33 | 0.09 | 0.018 | - | 0.0008 | 0.0022 | 7.6 | 1.8 | 28 | 33 | 0.440 | 0.442 |
| 11 | 0.65 | 0.21 | 0.60 | 0.28 | 1.85 | 0.35 | 0.07 | 0.021 | - | 0.0018 | 0.0014 | 9.2 | 2.2 | 105 | 8 | 0.445 | 0.450 |
| 12 | 0.32 | 0.30 | 1.00 | 0.21 | 1.96 | 0.25 | 0.05 | 0.017 | - | 0.0020 | 0.0031 | 3.9 | 2.1 | 89 | 35 | 0.427 | 0.430 |
| 13 | 0.32 | 0.25 | 1.10 | 0.22 | 2.01 | 0.25 | 0.10 | 0.033 | - | 0.0003 | 0.0051 | 6.3 | 2.0 | 30 | 41 | 0.432 | 0.442 |
| 14 | 0.61 | 0.30 | 0.73 | 1.72 | 1.83 | 0.35 | 0.20 | 0.020 | - | 0.0050 | 0.0009 | 3.6 | 1.5 | 273 | 12 | 0.416 | 0.433 |
| 15 | 0.30 | 0.25 | 0.56 | 1.58 | 1.56 | 0.26 | 0.15 | 0.018 | - | 0.0023 | 0.0005 | 4.0 | 1.6 | 113 | 0 | 0.429 | 0.430 |
| 16 | 0.58 | 0.37 | 1.08 | 0.23 | 2.23 | 0.32 | 0.06 | 0.021 | - | 0.0050 | 0.0058 | 37 | 1.3 | 208 | 44 | 0.401 | 0.404 |
| 17 | 0.60 | 0.36 | 1.12 | 0.22 | 2.15 | 0.32 | 0.07 | 0.020 | - | 0.0030 | 0.0054 | 4.3 | 1.8 | 240 | 40 | 0.403 | 0.410 |

Evaluation of Steel Forgings Determination of Compositions of Inclusions by EDS

Specimens were sampled from central parts of ends of the steel forgings of a diameter between 150 and 700 mm. Each specimen was embedded in a resin, and a sectional surface of the specimen was polished to form a microsection. The sectional surface of the specimen was observed under a scanning electron microscope at a magnification between 100x and 200x. Respective compositions of inclusions above 5 $\mu$m in length, and inclusion particles between 1 and 5 $\mu$m in length present in an observation area of 10 mm Sq. were examined by an EPMA. More specifically, the center of the inclusion grain was analyzed quantitatively by an EDS (energy dispersive x-ray spectrometer) (XM-Z0043T, Nippon Denshi Inc.) appended to an EPMA (JXA-8900RL, Nippon Denshi Inc.). Electron beam irradiation conditions were an acceleration voltage of 15 kV, a beam current of $1.70 \times 10^{-9}$ A, and a beam diameter of 1 $\mu$m. Analyzing time (duration of irradiation with the beam) for one point was 10 s and standard dead time was 20% by mass.

The respective compositions of the inclusions thus determined were classified. The respective total numbers of the S-containing inclusions and the Ti-containing inclusions present in a unit area was calculated.

Tensile Strength

Two tensile strength test specimens of 6 mm in diameter and 30 mm in gage length were cut out from an OR part (a central part) and a R/3 part, respectively. The tensile strength test specimens were subjected to a tensile test at an ordinary temperature according to Z2204 and Z2241, JIS.

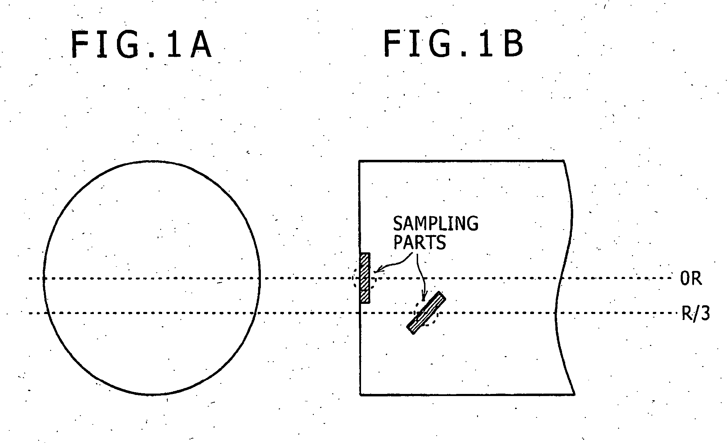

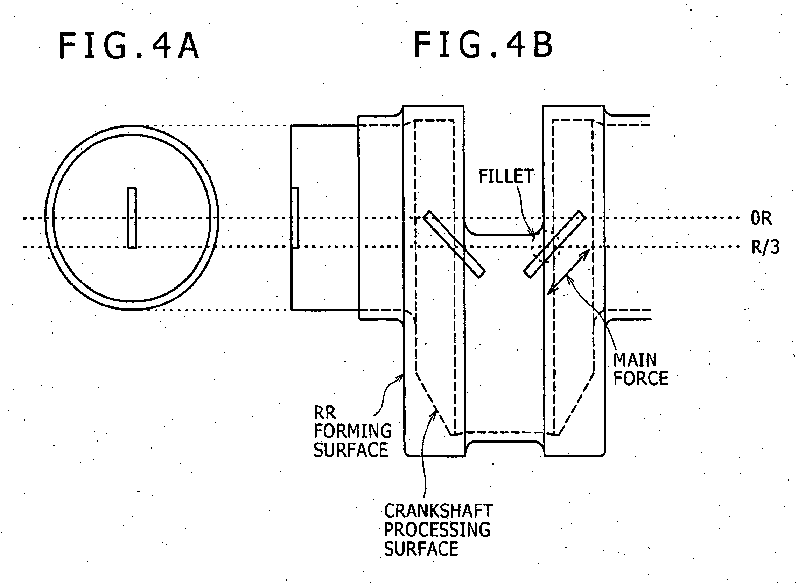

Fig. 1A is an end view of a forged round bar, namely, a steel forging, and Fig. 1B is a side elevation of the forged round bar. In Figs. 1A and 1B, the letter "R" denotes the radius of the round bar, "OR" denotes a central part of the round bar, "R/3" denotes a part of the round bar at a distance of R/3 from the center axis of the round bar, and R (3R/3) denotes a part on the surface of the round bar. The R/3 part of the round bar was used as a tensile strength test specimen because the R/3 part of the round bar corresponds to a fillet in an integral crankshaft formed by processing the round bar as shown in Fig. 4.

As shown in Fig. 1B, the tensile strength test specimen, namely, the R/3 part of the round bar, was inclined at an angle of 45° to the axis of the round bar because a main force that acts on the fillet of the crankshaft in operation in a direction at 45° to the axis of the original round bar as shown in Fig. 4. Thus the R/3 part sampled from the round bar was inclined at 45° to the center axis of the round bar to measure accurately the characteristic of the round bar with respect to the direction at 45° to the center axis of the round bar.

Fatigue Strength

Two fatigue strength test specimens, similarly to the two tensile strength test specimens, were cut out from an OR part(a central part) and a R/3 part, respectively. The fatigue strength test specimens were subjected to a rotating bending fatigue test under the following test conditions.

    Test specimen: Smooth specimen of 10 mm in diameter
    Test method: Rotating bending fatigue test (Stress ratio: 1, Rotating speed: 3600 rpm)
    Fatigue strength evaluating method: Stepwise method
    Stress step: 20 MPa
    Number of specimens: 5
    Fatigue strength:(Rupture stress) - (Difference stress)

Endurance limit Ratio

$$\text{Endurance limit ratio} \; (= (\text{Fatigue strength}) / (\text{Tensile strength}))$$

was calculated by using data obtained by the tensile strength test and the fatigue strength test

Samples 1 to 9 met the chemical composition and the number density of inclusion particles of a length above 5 $\mu$m required by the present invention. The OR parts of Samples 1 to 9 had high endurance limit ratios above 0.45. The R/3 parts of Samples 1 to 9 had high endurance limit ratios not lower than 0.46. The endurance limit ratio of the R/3 of each sample was higher than that of the OR part of the same sample for the following reasons.

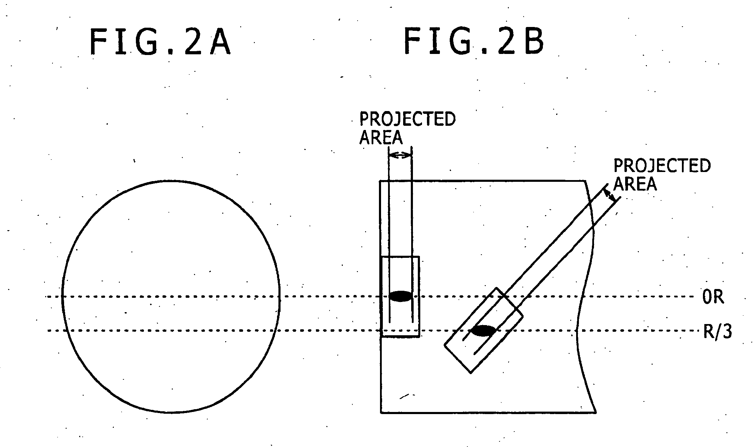

The R/3 part as a fatigue test specimen is inclined at 45° to the center axis of the forged round bar (the forging). The inclusions contained in the forging are inclined at 45° to the fatigue strength test specimen as shown in Fig. 2.

Fatigue strength is dependent on projection area with respect to the direction of action of the main force. The inclusions inclined at an inclination of 45° have a small projection area. Consequently, the fatigue strength is relatively high, and hence the endurance limit ratio of the R/3 part is higher than that of the OR part.

In Sample 10, the number density of Ti-containing inclusion particles above 5 $\mu$m in length is higher than the upper limit of the desired number density range, and the respective endurance limit ratios of the OR and the R/3 part are below 0.45 and below 0.46, respectively.

In Sample 11, the number density of S-containing inclusion particles above 5 $\mu$m in length is higher than the upper limit of the desired number density range, and the respective endurance limit ratios of the OR and the R/3 part are below 0.45 and below 0.46, respectively.

In each of Samples 12 and 13, the Ti content is higher than that specified by the present invention, the number density of Ti-containing inclusion particles above 5 $\mu$m in length is higher than the upper limit of the desired number density range, and the respective endurance limit ratios of the OR and the R/3 part are below 0.45 and below 0.46, respectively.

In each of Samples 14 and 15, the S content is higher than that specified by the present invention, the number density of S-containing inclusion particles above 5 $\mu$m in length is higher than the upper limit of the desired number density range, and the respective endurance limit ratios of the OR and the R/3 part are below 0.45 and below 0.46, respectively.

In each of Samples 16 and 17, the S and the Ti content are higher than those specified by the present invention, the respective densities of S-containing inclusions above 5 $\mu$m in length and Ti-containing inclusions above 5 $\mu$m in length are higher than the upper limits of the desired number density ranges, respectively, and the respective endurance limit ratios of the OR and the R/3 part are below 0.45 and below 0.46, respectively.

Example 2

Test ingots of 20 kg having a S content not higher than 0.0003% by mass or a Ti content not higher than 0.0004% by mass, and respectively having chemical compositions shown in Table 2 were made by using a vacuum melting furnace. Such a very low Ti and S content were measured by analysis using a glow discharge mass spectrometer (GD-MS). Measured data is shown in Table 2.

Table 2

| Sample No | Compositon (mass percent) | | | | | | | | | | | Number density of inclusion particles (above 5 $\mu$m) (particles/cm$^2$) | |
|---|---|---|---|---|---|---|---|---|---|---|---|---|---|
| | C | Si | Mn | Ni | Cr | Mo | V | Al | Ca | S | Ti | S-containing | Ti-containing |
| 18 | 0.35 | 0.22 | 0.75 | 0.35 | 1.88 | 0.32 | 0.08 | 0.035 | - | 0.0003 | 0.0004 | 14 | 0 |
| 19 | 0.65 | 0.24 | 0.63 | 0.22 | 1.62 | 0.32 | 0.07 | 0.018 | - | 0.0003 | 0.0002 | 18 | 0 |
| 20 | 0.58 | 0.22 | 0.61 | 0.34 | 1.83 | 0.31 | 0.07 | 0.035 | - | 0.0002 | 0.0003 | 6 | 0 |
| 21 * | 0.45 | 0.36 | 1.01 | 0.48 | 1.79 | 0.32 | 0.11 | 0.021 | 0.0006 | 0.0016 | 0.0001 | 114 | 0 |
| 22 * | 0.61 | 0.32 | 0.75 | 0.31 | 2.03 | 0.35 | 0.18 | 0.016 | 0.0005 | 0.0003 | 0.0001 | 22 | 0 |
| 23 * | 0.58 | 0.27 | 0.86 | 0.44 | 1.76 | 0.26 | 0.09 | 0.016 | - | 0.0001 | 0.0007 | 2 | 12 |
| 24 * | 0.38 | 0.31 | 0.99 | 0.41 | 1.92 | 0.25 | 0.09 | 0.037 | - | 0.0001 | 0.0001 | 4 | 0 |
| 25 * | 0.65 | 0.25 | 1.02 | 0.22 | 2.01 | 0.25 | 0.10 | 0.034 | 0.0005 | 0.0023 | 0.0001 | 125 | 0 |
| 26 * | 0.57 | 0.31 | 1.03 | 0.44 | 2.19 | 0.35 | 0.10 | 0.024 | - | 0.0001 | 0.0035 | 6 | 33 |

* not according to the invention

Slag basicity (C/S) and C/A are not shown in Table 2 because the ingots were laboratory ingots and any refining slag was not used for making the ingots. Since the amount of the laboratory ingots was insufficient for fatigue test, fatigue test could not be conducted and hence endurance limit ratio could not be calculated. As mentioned above in connection with Example 1, the fatigue strength is dependent on the number density of specific inclusions. Therefore, it can be inferred that Samples 18 to 20 having densities of S-containing inclusions above 5 $\mu$m in length and Ti-containing inclusions above 5 $\mu$m in length nearly equal to or below those of Example 1. have high endurance limit ratios equal to or higher than that in Example 1, respectively.

The densities of S-containing inclusions above 5 $\mu$m in length in Samples 21 and 25 are higher than the upper limit of the desired number density range. Therefore, it is inferred that Samples 21 and 25 are unsatisfactory in endurance limit ratio. The number density of Ti-containing inclusion particles above 5 $\mu$m in length in Sample 26 is higher than the upper limit of the desired number density range. Therefore, it is inferred that Sample 26 is unsatisfactory in endurance limit ratio.

Example 3

Hydrogen Cracking Resistance

Hydrogen cracking susceptibilities of specimens of the steel forgings in Examples 1 and 2 were empirically evaluated through comparative hydrogen susceptibility tests.

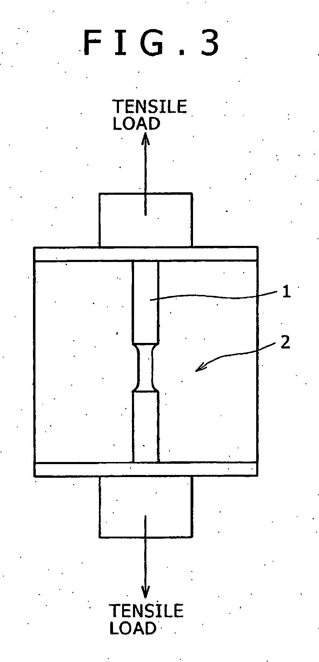

A sample having the shape of a round bar was processed to form a specimen having the shape of a dumbbell of 150 mm in length and 10 mm in gage length. The specimen had a middle part of 4 mm in diameter, and end parts, namely, gripping parts, of 8 mm in diameter. A thread of 15 mm in length was formed in the specimen. As shown in Fig. 3, a specimen 1 immersed in a $0.5$mol/$1$H$_2$SO$_4$+$0.01$ mol/$1$KSCN aqueous solution 2 was tested.

Each specimen was immersed in the aqueous solution, a current was supplied to the specimen in a current density of 0.5 A/dm$^2$ for cathodic electrolysis. Thus the specimen was mounted on the apparatus shown in Fig. 3 while hydrogen was added to the specimen. A tensile load was applied to the specimen in an axial direction for a SSRT (slow strain rate test) and stress $S_1$ (elongation) induced in the specimen was measured. The specimen was pulled at a pulling speed of $2 \times 10^{-3}$ mm/min.

A specimen was tested by a SSRT under the same pulling condition in the atmosphere without immersing the specimen in the aqueous solution The rupture stress So induced in each of the specimens was measured.

A hydrogen cracking susceptibility value S was calculated by using the measured data and Expression (3).

$$S = \{1 - (S_1/S_0)\} \times 100 \qquad \dots\dots\dots (3)$$

Calculated data is shown in Table 3.

The hydrogen cracking susceptibility of each of the steel forgings was graded according to standards represented by marks shown below.

Double circle: S < 30, very high hydrogen cracking resistance
Circle: S = 30 to 40, high hydrogen cracking resistance
Triangle: S = 40 to 50, average hydrogen cracking resistance
Cross: S $\geq$ 50, poor hydrogen cracking resistance

Table 3

| Sample No | Composition (mass percent) | | | | | | | | | | | Number density of inclusion particles (above 5 μm) (particles/cm$^2$) | | Number density of inclusion particles (between 1 and 5 μm) (particles/cm$^2$) | | Hydrogen cracking resistance (% by mass) | Grade f hydrogen cracking resistance |
|---|---|---|---|---|---|---|---|---|---|---|---|---|---|---|---|---|---|
| | C | Si | Mn | Ni | Cr | Mo | V | Al | Ca | S | Ti | S-containing | Ti-containing | S-containing | Ti-containing | | |
| 1 * | 0.60 | 0.22 | 1.00 | 0.42 | 2.05 | 0.35 | 0.08 | 0.035 | - | 0.0010 | 0.0011 | 40 | 6 | 72 | 27 | 27 | ◎ |
| 2 * | 0.70 | 0.19 | 0.80 | 0.75 | 1.15 | 0.28 | 0.12 | 0.025 | - | 0.0010 | 0.0016 | 24 | 1 | 41 | 19 | 28 | ◎ |
| 3 | 0.43 | 0.17 | 0.77 | 0.74 | 1.12 | 0.26 | 0.10 | 0.026 | - | 0.0010 | 0.0009 | 20 | 0 | 35 | 12 | 31 | ○ |
| 4 * | 0.30 | 0.22 | 0.91 | 0.40 | 2.04 | 0.30 | 0.05 | 0.039 | - | 0.0009 | 0.0005 | 16 | 0 | 25 | 9 | 34 | ○ |
| 5 * | 0.45 | 0.36 | 0.69 | 1.70 | 1.75 | 0.32 | 0.19 | 0.026 | - | 0.0006 | 0.0012 | 31 | 2 | 55 | 25 | 29 | ◎ |
| 6 * | 0.25 | 0.29 | 0.55 | 1.62 | 1.55 | 0.21 | 0.15 | 0.026 | - | 0.0008 | 0.0009 | 58 | 0 | 91 | 13 | 32 | ○ |
| 7 * | 0.31 | 0.23 | 1.05 | 0.25 | 1.65 | 0.29 | 0.06 | 0.025 | 0.0005 | 0.0012 | 0.0008 | 55 | 5 | 88 | 14 | 31 | ○ |
| 8 * | 0.40 | 0.26 | 0.85 | 0.31 | 2.05 | 0.28 | 0.10 | 0.022 | - | 0.0018 | 0.0016 | 32 | 20 | 47 | 35 | 28 | ◎ |
| 9 * | 0.45 | 0.20 | 0.82 | 0.36 | 1.75 | 0.26 | 0.09 | 0.022 | - | 0.0004 | 0.0025 | 21 | 27 | 40 | 45 | 27 | ◎ |
| 10 | 0.66 | 0.29 | 0.91 | 0.21 | 1.99 | 0.33 | 0.09 | 0.018 | - | 0.0008 | 0.0022 | 28 | 33 | 35 | 50 | 26 | ◎ |
| 11 | 0.65 | 0.21 | 0.60 | 0.28 | 1.85 | 0.35 | 0.07 | 0.021 | - | 0.0018 | 0.0014 | 105 | 8 | 155 | 27 | 48 | Δ |
| 12 | 0.32 | 0.30 | 1.00 | 0.21 | 1.96 | 0.25 | 0.05 | 0.017 | - | 0.0020 | 0.0031 | 89 | 35 | 139 | 68 | 27 | ◎ |
| 13 | 0.32 | 0.25 | 1.10 | 0.22 | 2.01 | 0.25 | 0.10 | 0.033 | - | 0.0003 | 0.0051 | 30 | 41 | 51 | 91 | 25 | ◎ |
| 14 | 0.61 | 0.30 | 0.73 | 1.72 | 1.83 | 0.35 | 0.20 | 0.020 | - | 0.0050 | 0.0009 | 273 | 12 | 393 | 33 | 75 | × |
| 15 | 0.30 | 0.25 | 0.56 | 1.58 | 1.56 | 0.26 | 0.15 | 0.018 | - | 0.0023 | 0.0005 | 113 | 0 | 161 | 11 | 53 | × |
| 16 | 0.58 | 0.37 | 1.08 | 0.23 | 2.23 | 0.32 | 0.06 | 0.021 | - | 0.0050 | 0.0058 | 208 | 44 | 312 | 132 | 53 | × |
| 17 | 0.60 | 0.36 | 1.12 | 0.22 | 2.15 | 0.32 | 0.07 | 0.020 | - | 0.0030 | 0.0054 | 240 | 40 | 388 | 98 | 54 | × |
| 18* | 0.35 | 0.22 | 0.75 | 0.35 | 1.88 | 0.32 | 0.08 | 0.035 | - | 0.0003 | 0.0004 | 14 | 0 | 30 | 17 | 29 | ◎ |
| 19 | 0.65 | 0.24 | 0.63 | 0.22 | 1.62 | 0.32 | 0.07 | 0.018 | - | 0.0003 | 0.0002 | 18 | 0 | 27 | 4 | 41 | Δ |
| 20 | 0.58 | 0.22 | 0.61 | 0.34 | 1.83 | 0.31 | 0.07 | 0.035 | - | 0.0002 | 0.0003 | 6 | 0 | 9 | 5 | 44 | Δ |
| 21 | 0.45 | 0.36 | 1.01 | 0.48 | 1.79 | 0.32 | 0.11 | 0.021 | 0.0006 | 0.0016 | 0.0001 | 114 | 0 | 162 | 2 | 81 | × |

14

(continued)

| Sample No | Composition (mass percent) | | | | | | | | | | | Number density of inclusion particles (above 5 μm) (particles/cm²) | | Number density of inclusion particles (between 1 and 5 μm) (particles/cm²) | | Hydrogen cracking resistance (% by mass) | Grade f hydrogen cracking resistance |
|---|---|---|---|---|---|---|---|---|---|---|---|---|---|---|---|---|---|
| | C | Si | Mn | Ni | Cr | Mo | V | Al | Ca | S | Ti | S-containing | Ti-containing | S-containing | Ti-containing | | |
| 22 | 0.61 | 0.32 | 0.75 | 0.31 | 2.03 | 0.35 | 0.18 | 0.016 | 0.0005 | 0.0003 | 0.0001 | 22 | 0 | 44 | 3 | 58 | × |
| 23 | 0.58 | 0.27 | 0.86 | 0.44 | 1.76 | 0.26 | 0.09 | 0.016 | - | 0.0001 | 0.0007 | 2 | 12 | 4 | 16 | 50 | × |
| 24 | 0.38 | 0.31 | 0.99 | 0.41 | 1.92 | 0.25 | 0.09 | 0.037 | - | 0.0001 | 0.0001 | 4 | 0 | 8 | 0 | 55 | × |
| 25 | 0.65 | 0.25 | 1.02 | 0.22 | 2.01 | 0.25 | 0.10 | 0.034 | 0.0005 | 0.0023 | 0.0001 | 125 | 0 | 181 | 1 | 82 | × |
| 26 | 0.57 | 0.31 | 1.03 | 0.44 | 2.19 | 0.35 | 0.10 | 0.024 | - | 0.0001 | 0.0035 | 6 | 33 | 5 | 71 | 51 | × |
| * According to the invention | | | | | | | | | | | | | | | | | |

Inclusion characteristic of each specimen and the hydrogen cracking resistance of each forged steel are shown in Table 3. Samples 1 to 9 and 18 met the chemical composition and the condition for the number density of inclusion particles of 1 to 5 μm in length specified by the present invention, and were excellent in hydrogen cracking resistance. They were also excellent in endurance limit ratio and were proved to be optimum forged steels.

Samples 19 to 26 had a number density of S-containing or Ti-containing inclusion particles between 1 and 5 μm in length below the lower limit of the number density specified by the present invention. Therefore, those samples were satisfactory in endurance limit ratio, but unsatisfactory in hydrogen cracking resistance. Thus those samples need to be processed by a dehydrogenation process to control the hydrogen content thereof strictly.

Samples 11, 14 to 17 had a number density of S-containing inclusion particles above 5 μm in length above the upper limit of the desired number density specified by the present invention, and were unsatisfactory in both endurance limit ratio and hydrogen cracking resistance.

## Claims

1. A forged steel consisting of:

   0.15 to 0.75% by mass C,
   0.1 to 0.6% by mass Si,
   0.3 to 1.4% by mass Mn,
   0.1 to 2% by mass Ni,
   0.5 to 2.5% by mass Cr,
   0.1 to 0.5% by mass Mo,
   0.01 to 0.2% by mass V,
   0.015 to 0.04% by mass Al,
   0.0002 to 0.002% by mass S,
   0.0002 to 0.003% by mass Ti, and optionally one or more of Ca, B, W, Nb, Ta, Cu, Ce, Zr, and Te, in a total amount of 0.1% by mass or below, and
   the balance of Fe and inevitable impurities;
   wherein the respective number densities of S-containing inclusion particles having a S content of 20% by mass or above, and Ti-containing inclusion particles having a Ti content of 50% by mass or above among inclusion particles above 5 μm in length present in an observation area in a cross section of the forged steel are 100 particles/cm$^2$ or below, and 30 particles/cm$^2$ or below, respectively, and wherein

   the respective number densities of inclusion particles having a S content of 20% by mass or above, and inclusion particles having a Ti content of 50% by mass among inclusion particles between 1 and 5 μm in length present in the cross section of the forged steel is 10 particles/cm$^2$ or above and 5 particles/cm$^2$ or above, respectively.

2. A crankshaft made of the forged steel according to claim 1.

3. The crankshaft according to claim 2, wherein the crankshaft has main journals of 200 mm or above in diameter.

4. Use of the crankshaft according to claim 2 or 3 as a component of a diesel engine for power generation or a ship.

## Patentansprüche

1. Geschmiedeter Stahl, bestehend aus:

   0,15 bis 0,75 Masse-% C
   0,1 bis 0,6 Masse-% Si,
   0,3 bis 1,4 Masse-% Mn,
   0,1 bis 2 Masse-% Ni,
   0,5 bis 2,5 Masse-% Cr,
   0,1 bis 0,5 Masse-% Mo,
   0,01 bis 0,2 Masse-% V,
   0,015 bis 0,04 Masse-% Al,
   0,0002 bis 0,002 Masse-% S,

0,0002 bis 0,003 Masse-% Ti und gegebenenfalls einem oder mehreren von Ca, B, W, Nb, Ta, Cu, Ce, Zr und Te in einer Gesamtmenge von 0,1 Masse-% oder darunter, und

wobei der Rest Fe und unvermeidbare Verunreinigung sind,

wobei die entsprechende Zahlendichte von S-enthaltenden Einschlußteilchen mit einem S Anteil von 20 Masse-% oder darüber und Ti-enthaltenen Einschlußteilchen mit einem Ti Anteil von 50 Masse-% oder darüber unter den Einschlußteilchen von größer 5 $\mu$m in der Länge, vorliegend in einem Beobachtungsbereich in einem Querschnitt des geschmiedeten Stahls, 100 Teilchen/cm$^2$ oder darunter bzw. 30 Teilchen/cm$^2$ oder darunter sind, und

wobei die entsprechenden Zahlendichten von Einschlußteilchen mit einem S Anteil von 20 Masse-% oder darüber und Einschlußteilchen mit einem Ti Anteil von 50 Masse-% unter den Einschlußteilchen zwischen 1 und 5 $\mu$m in der Länge, vorliegend in dem Querschnitt des geschmiedeten Stahls, 10 Teilchen/cm$^2$ oder darüber bzw. 5 Teilchen/cm$^2$ oder darüber sind.

2. Kurbelwelle, hergestellt aus dem geschmiedeten Stahl gemäß Anspruch 1.

3. Kurbelwelle gemäß Anspruch 2, wobei die Kurbelwelle Hauptzapfen von 200 mm oder darüber im Durchmesser aufweist.

4. Verwendung der Kurbelwelle gemäß Anspruch 2 oder 3 als eine Komponente eines Dieselmotors zur Stromerzeugung oder eines Schiffs.


**Revendications**

1. Acier forgé constitué :

de 0,15 à 0,75% en masse de C,
de 0,1 à 0,6% en masse de Si,
de 0,3 à 1,4% en masse de Mn,
de 0,1 à 2% en masse de Ni,
de 0,5 à 2,5% en masse de Cr,
de 0,1 à 0,5% en masse de Mo,
de 0,01 à 0,2% en masse de V,
de 0,015 à 0,04% en masse d'Al,
de 0,0002 à 0,002% en masse de S,
de 0,0002 à 0,003% en masse de Ti,
et, facultativement, d'un ou de plusieurs élément(s) parmi Ca, B, W, Nb, Ta, Cu, Ce, Zr et Te, en une quantité totale inférieure ou égale à 0,1% en masse, et
le reste étant du Fe et des impuretés inévitables ;
dans lequel les densités numériques respectives des particules d'inclusion contenant S ayant une teneur en S supérieure ou égale à 20% en masse, et des particules d'inclusion contenant Ti ayant une teneur en Ti supérieure ou égale à 50% en masse parmi les particules d'inclusion de longueur supérieure à 5 $\mu$m présentes dans une zone d'observation dans une section transversale de l'acier forgé sont, respectivement, inférieure ou égale à 100 particules/cm$^2$, et inférieure ou égale à 30 particules/cm$^2$, et dans lequel
les densités numériques respectives des particules d'inclusion ayant une teneur en S supérieure ou égale à 20% en masse, et des particules d'inclusion ayant une teneur en Ti de 50% en masse parmi les particules d'inclusion de longueur comprise entre 1 et 5 $\mu$m présentes dans la section transversale de l'acier forgé sont, respectivement, supérieure ou égale à 10 particules/cm$^2$ et supérieure ou égale à 5 particules/cm$^2$.

2. Vilebrequin réalisé en acier forgé selon la revendication 1.

3. Vilebrequin selon la revendication 2, dans lequel le vilebrequin a des tourillons principaux ayant un diamètre supérieur ou égal à 200 mm.

4. Utilisation du vilebrequin selon la revendication 2 ou 3 comme composant d'un moteur diesel pour la production d'énergie ou d'un navire.

# FIG.1A

# FIG.1B

SAMPLING
PARTS

.......... 0R

.......... R/3

EP 1 978 124 B1

FIG.2A    FIG.2B

# FIG.3

TENSILE
LOAD

1

2

TENSILE
LOAD

# FIG.4A

# FIG.4B

OR
R/3

MAIN FORCE

FILLET

RR FORMING SURFACE

CRANKSHAFT PROCESSING SURFACE

**Patent documents cited in the description**

- JP 2004211206 A
- JP H7188853 A
- JP H7238342 A
- JP 2000087179 A
- JP 2004225128 A
- JP S6263651 A
- JP 2003183722 A
- JP 2003268438 A
- JP 2006336092 A
- EP 1420078 A
- US 5855846 A
- US 5919415 A
- JP 2000096185 A

**Non-patent literature cited in the description**

- Study of Fatigue Strength of High-Strength Materials for Crankshafts. *Jour. of the JIME,* 2001, vol. 36 (6), 385-390